(19) Europäisches Patentamt
European Patent Office
Office européen des brevets

(11) **EP 1 783 722 A1**

(12) **EUROPEAN PATENT APPLICATION**
published in accordance with Art. 158(3) EPC

(43) Date of publication:
**09.05.2007 Bulletin 2007/19**

(51) Int Cl.:
***G09B 29/00*** *(2006.01)*    ***G01C 21/00*** *(2006.01)*
***G08G 1/09*** *(2006.01)*

(21) Application number: **05767265.1**

(22) Date of filing: **29.07.2005**

(86) International application number:
**PCT/JP2005/013942**

(87) International publication number:
**WO 2006/013790 (09.02.2006 Gazette 2006/06)**

(84) Designated Contracting States:
**DE FR GB**

(30) Priority: **04.08.2004 JP 2004228555**
         **22.07.2005 JP 2005213293**

(71) Applicant: **MATSUSHITA ELECTRIC INDUSTRIAL CO., LTD.**
**Osaka 571-8501 (JP)**

(72) Inventors:
• **KUROKAWA, Hisashi**
**Matsushita Electric Ind. Co. Ltd**
**Chuo-ku**
**Osaka 540-6319 (JP)**

• **SOTA, Toshihiro**
**Matsushita Electric Ind. Co. Ltd.**
**Chuo-ku**
**Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **POSITION INFORMATION TRANSMITTER, POSITION INFORMATION RECEIVER, POSITION INFORMATION TRANSMITTING METHOD, AND POSITION INFORMATION TRANSMISSION PROGRAM**

(57) Even if an object having a shape similar to that of a specific object is present near the specific object, the position information representing the position of the specific object is transmitted, and the specific object can be identified more accurately on the basis of the position information. When a shape data creating section (110) of a position information transmitter (100) creates shape data and transmits it to a position information receiver (200), a wrong identification judging section (120) previously performs the same road-identification processing as that of a wrong identification judging section (220) of a position information receiver (200). If a road which may be identified wrongly is identified, an additional information adding section (130) adds additional information so as to identify a road, a transmission data creating section (140) adds the distance from the first portion of the road and the degree of congestion to the shape data to thus create transmission data, and a data transmitting section (150) transmits data to the position information receiver (200).

FIG.3

**Description**

Technical Field

The present invention relates to an information communicating method for notifying road position information indicating the road position where congestion, accident etc. is occurring in a system for providing traffic information, and to an apparatus for exchanging information about the position using the method, more specifically, to a position information transmission apparatus, a position information receiving apparatus, a position information transmitting method and a position information transmitting program in the position information exchanging system of accurately and rapidly notifying the position on a digital map,.

Background Art

Recently, vehicles mounted with navigation-mounted vehicle apparatus is rapidly increasing. The navigation-mounted vehicle system used by the navigation-mounted vehicle includes the digital map database, and displays the map of the surrounding of the position of its vehicle on a screen and also displays the traveling track and the result of route search to the destination on the map based on the latitude and longitude data received by the GPS receiver.

However, the digital map database does not necessarily have the actual road shape accurately digitized, and includes errors. The degree of errors differs depending on the digital map database, but digital map database with a reduction scale of 1/25000, and which is currently on the market, for example, includes an error of about 50 m depending on locations.

The navigation-mounted vehicle receives traffic information such as congestion information and accident information provided from the traffic information providing system, and displays the position of congestion and accident on the map or performs route search by adding the relevant information into conditions.

In the conventionally proposed traffic information providing system, the traffic information is provided from traffic information collecting center A1101 controlling a certain region A to information distributing center 1102, and the traffic information edited for each media (FM broadcast, road beacon, portable telephone etc.) are transmitted through each media. Traffic information collecting center A1101 exchangestrafficinformation withtrafficinformation collecting center B1103 of another region B to collect the traffic information of wide zone including the surrounding region.

The conventional traffic information providing system has the following problems when providing the latitude and longitude data of the position individually as traffic information to notify the congestion position and the accident position. That is, as described above, the digital map database in the navigation-mounted vehicle has errors that differ according to the type, so that the navigation-mounted vehicle at the destination may identify the position on a different road as the accident position if the digital map database of the type differing between the provider and the destination of the traffic information is used.

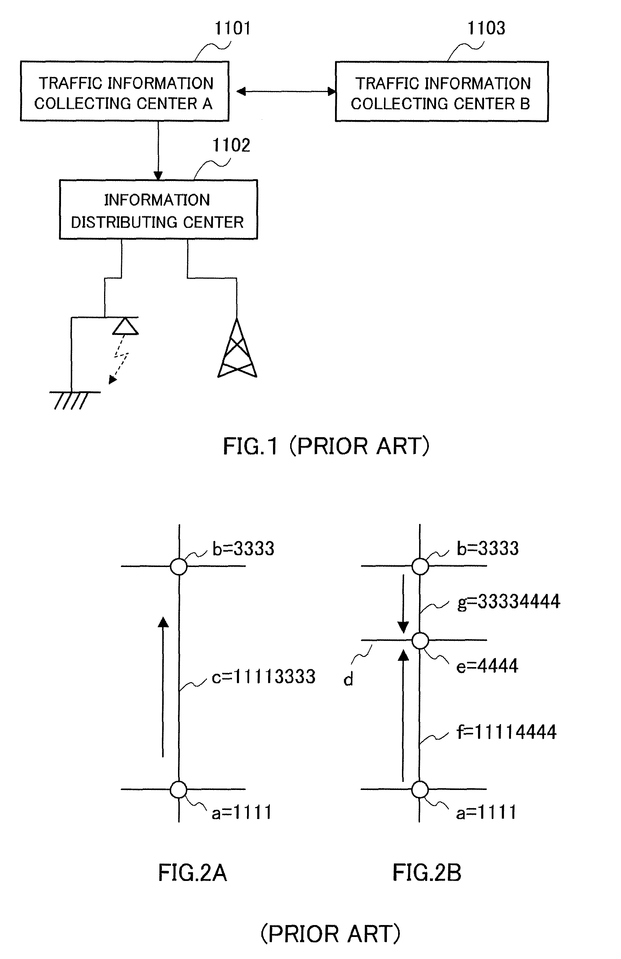

In order to resolve the inaccuracy of information communication and information display, the map information shown in FIG.2 is used in the navigation-mounted vehicle system. As one example is shown in FIG.2A, with the intersections a and b of the road network set as nodes, and the road c between the nodes set as link, the node number (a=1111, b=3333) arbitrary representing the node is set to each node, and the link number (c=11113333) arbitrary representing the relevant link is set to each link. The node number and the link number set to each intersection and road are stored in association with each other in the digital map database of companies.

The traffic information indicating the traffic position, accident position etc. is configured including the link number for specifying the road, and the information indicating the point on the road with the expression of meters from the head of the road specified by the link number. For example, with respect to the traffic information of, for example, "position 200 m from the head of the road of link number= "11113333" ", the point of 200 m from the node of the node number "1111" of the road of the link number "11113333" can be followed irrespective of which digital map database the navigation-mounted vehicle apparatus uses, so that the position on the same road, that is, the position indicated by the traffic information can be obtained.

The node number and the link number defined in the road network are required to assign a new number if the road d is newly constructed or the road is changed as shown in FIG.2B. In this case, the digital map data of the companies must be updated according to the change of the node number and the link number.

Road will be newly constructed and changed continuously in the future, a great amount of work and the cost involved therewith must be permanently provided as long as the method of displaying the road position with the node number and the link number as in the prior art is used, which results in a problem that the maintenance becomes a great burden.

In order to improve such point, arranging a shape matching section is proposed where an event occurring position is specified from the position information by performing shape matching in traffic information collecting center A1101 of a certain region (see, for example, Patent Document 1). When the event such as traffic accident and congestion occurs, traffic information collecting center A1101 receives the information indicating the occurrence of congestion from a vehicle sensor arranged on the road, and provides the congestion information to traffic information collecting center B1103 of another region. Traffic information collecting center A1101 specifies the road interval on the digital map by performing the shape matching between the map data of the digital map database and a coordinate sequence indicating the road shape by the shape matching section, and specifies the congestion interval on the digital map based on the distance data from the starting position of the road interval.

Patent Document 1: Japanese Patent Application Laid-Open No. 2001-41757

Disclosure of Invention

Problems to be Solved by the Invention

However, the conventional digital map does not necessarily digitize the actual road shape accurately, and may include errors depending on the manufacturing companies.

Therefore, as in the prior art, if a method is used where a road is specified by the shape of the road by shape matching using the coordinate sequence, the specification of the road may be specified incorrectly when the roads having a similar shape exist in parallel in the vicinity, and the information related to the road may not be communicated accurately.

Furthermore, if the road is represented by a great number of coordinate sequences when creating the transmission data on the transmitting side, the shape of the road is reproduced accurately so that the road can be more specified accurately. However, a problem occurs in that the data size of the transmission data increases.

The above problems occur not only with roads, but with other objects such as buildings and rivers if the shape data is used as the position information.

It is therefore an object of the present invention, in view of solving the above problems, to provide a position information transmission apparatus, a position information transmitting method, a position information transmitting program capable of transmitting the position information indicating an object and specifying the object with the position information about the receiving side more accurately even if objects having similar shape exist in the vicinity, and a position information receiving apparatus on the receiving side.

Means for Solving the Problem

In order to achieve the above object, a position information transmission apparatus of the present invention is a position information transmission apparatus for transmitting shape data indicating an object on a map to a position information receiving apparatus, and causing the position information receiving apparatus perform a specification processing using the shape data to specify the object, the position information transmission apparatus including an incorrect specification judging section for performing a specification processing which is the same as the specification processing on the position information receiving apparatus side using the shape data, and judging whether or not the object is specified incorrectly, an adding section for adding additional information for specifying the object to the shape data when the incorrect specification judging section judges that the object is specified incorrectly , and a transmission section for transmitting the shape data added with the additional information to the position information receiving apparatus.

According to this configuration, a matching process which is the same as the matching process on the position information receiving apparatus side is performed using the shape data, and when it is judged that the object is specified incorrectly, additional information is added to the shape data so as to allow specification of the object and then transmitted, so that the object is specified accurately with the received additional information and the shape data in the position information receiving apparatus even if an object of a similar shape exists in the vicinity.

Advantageous Effect of the Invention

According to the present invention, it is possible to specify the object more accurately by the position information even if an object of a similar shape exists in the vicinity.

Brief Description of Drawings

FIG.1 shows a configuration example of a conventional traffic information exchanging system;
FIG.2A shows one example of a node and a link in the prior art;

FIG.2B shows another example of a node and a link in the prior art;

FIG.3 shows a configuration of a position information exchanging system including a position information transmission apparatus and a position information receiving apparatus according to Embodiment 1 of the present invention;

FIG.4A is a flow chart illustrating the operation of the transmission apparatus of Embodiment 1;

FIG.4B is a flow chart illustrating the operation of the receiving apparatus of Embodiment 1;

FIG.5 is an explanatory view showing an specification processing of a road in an incorrect specification judging section;

FIGs.6A and 6B show one example of creating the additional information;

FIGs. 7A and 7B show another example of creating the additional information;

FIG.8 shows a configuration of a position information exchanging system including a position information transmission apparatus and a position information receiving apparatus according to Embodiment 2 of the present invention;

FIG.9A is a flow chart illustrating the operation of the transmission apparatus of the position information exchanging system of Embodiment 2;

FIG.9B is a flow chart illustrating the operation of the receiving apparatus of Embodiment 2;

FIG.10A is a flow chart illustrating another operation of the transmission apparatus of the position information exchanging system of Embodiment 2;

FIG.10B is a flow chart illustrating another operation of the receiving apparatus of Embodiment 2;

FIG.11 shows a position information exchanging system including a position information transmission apparatus and a position information receiving apparatus according to Embodiment 3 of the present invention;

FIG.12 shows a configuration of a position information exchanging system including a position information transmission apparatus, a position information receiving apparatus and an storing apparatus according to Embodiment 4 of the present invention;

FIG.13A is a flow chart illustrating the off-line operation of the transmission apparatus of Embodiment 4; and

FIG.13B is a flow chart illustrating the on-line operation of the transmission apparatus of Embodiment 4.

Best Mode for Carrying Out the Invention

The embodiments of the present invention will now be described with reference to the drawings. In the following embodiments, the object is a road by way of example.

(Embodiment 1)

A position information exchanging system including a position information transmission apparatus and a position information receiving apparatus according to Embodiment 1 of the present invention will now be described.

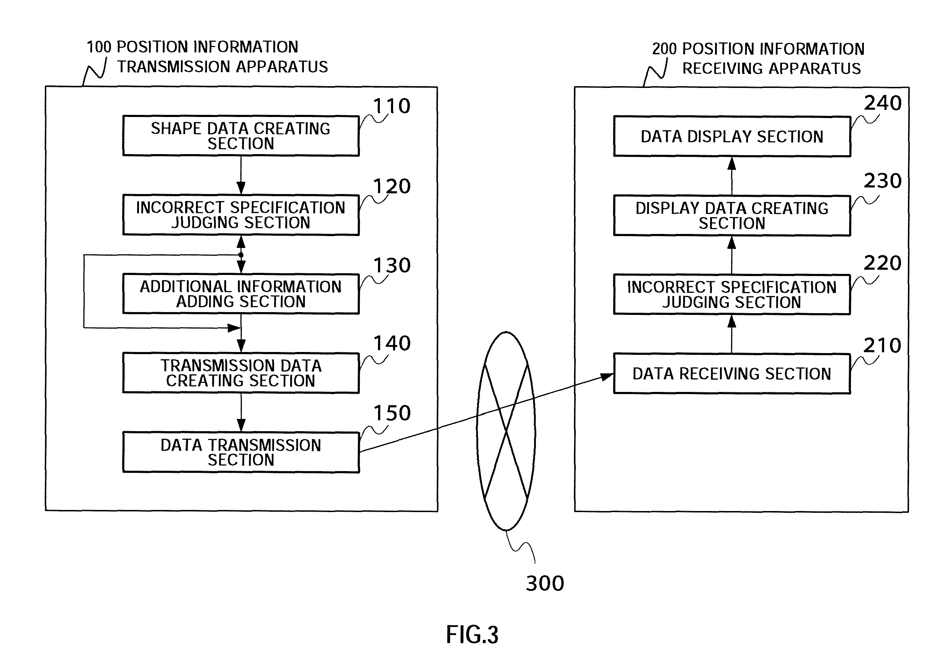

FIG.3 shows a configuration of the position information exchanging system equipped with the position information transmission apparatus and the position information receiving apparatus according to Embodiment 1 of the present invention.

In FIG.3, the position information exchanging system is configured with position information transmission apparatus 100 and a plurality (one herein for the sake of convenience) of position information receiving apparatuses 200 connected through network 300.

Position information transmission apparatus 100 includes shape data creating section 110, incorrect specification judging section 120, additional information adding section 130, transmission data creating section 140, and data transmission receiver 150.

Shape data creating section 110 creates shape data consisting of coordinate sequence for specifying the road.

Incorrect specification judging section 120 judges whether or not the road is specified incorrectly by performing a road specification processing (for example, pattern matching with data on the digital map) which is the same as position information receiving apparatus 200 based on the shape data created at shape data creating section 110. In the case of this embodiment, the road is the object so that the likeliness of the road to be specified is evaluated by performing the pattern matching processing between the road network data on the digital map and the shape data created by shape data creating section 110. The evaluation value representing the likeliness is calculated, and one or a plurality of candidate roads are selected based on the evaluation value. If there are the candidate roads, and the evaluation value thereof are similar to each other, the possibility becomes higher where the road is specified incorrectly. In such case, additional information is added to the shape data from additional information adding section 130 so as to allow specification of the road and the road specification processing is repeated.

When incorrect specification judging section 120 judges that the road is specified incorrectly, additional information adding section 130 adds the additional information for specifying the road indicated by the position information to the position information.

Transmission data creating section 140 creates the transmission data by adding the association data associated with the road such as traffic information and route information to the shape data. That is, in addition to the shape data for specifying the road, the transmission data includes data for specifying a more specific position, for example, associated data indicating the distance from the head of the road, current information (for example, degree of congestion etc.) and the like.

Data transmission section 150 transmits the created transmission data to position information receiving apparatus 200 by a communication section such as a mobile telephone.

In FIG.3, position information receiving apparatus 200 includes data receiving section 210, incorrect specification judging section 220, display data creating section 230, and data display section 240.

Data receiving section 210 receives data from position information transmission apparatus 100. Incorrect specification judging section 220 specifies the road through methods such as pattern matching. Display data creating section 230 creates the display data. Data display section 240 displays the created display data.

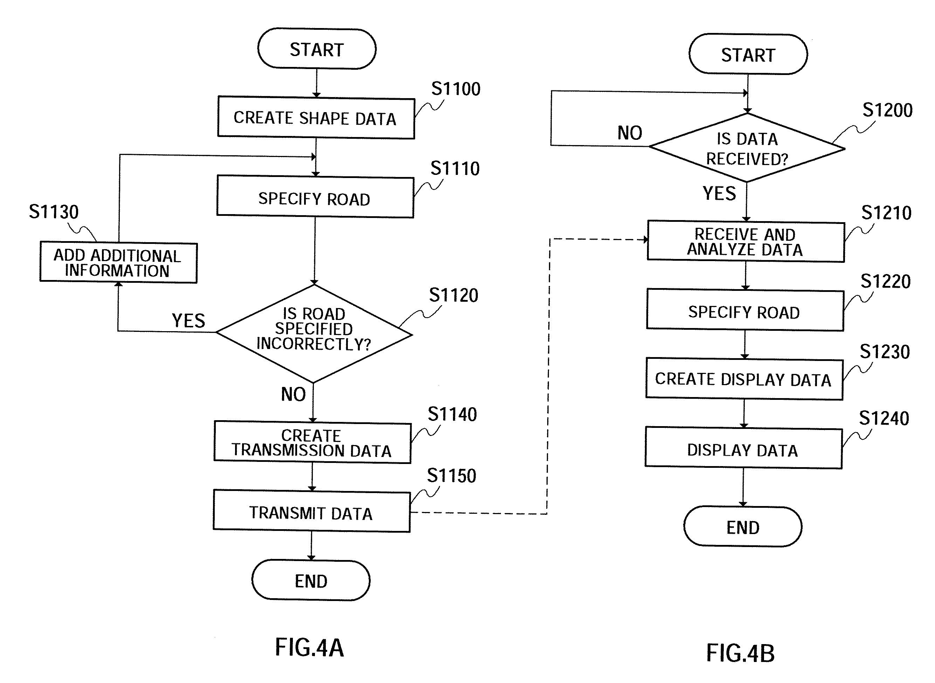

The operation of the position information exchanging system of Embodiment 1 configured as above will now be described using FIG.4.

FIG. 4 is a flow chart illustrating the operation of the position information exchanging system of Embodiment 1. FIG.4A shows the operation of position information transmission apparatus 100 and FIG.4B shows the operation of position information receiving apparatus 200.

When information related to road and the like as the object on the digital map to be transmitted is generated with respect to each position information receiving apparatus 200, or position information receiving apparatus 200 traveling through a specific region, or furthermore, to position information receiving apparatus 200 having a map of a specific region, position information transmission apparatus 100 creates the shape data to be transmitted to position information receiving apparatus 200 by shape data creating section 110 (S1100).

Subsequently, in position information transmission apparatus 100, incorrect specification judging section 120 performs the road specification processing (for example, pattern matching processing of shape data) which is the same as incorrect specification judging section 220 of position information receiving apparatus 200 based on the shape data created by shape data creating section 110 (S1110), and subsequently judges whether or not there is a possibility where the road is specified incorrectly (S1120).

The specification processing of the road in incorrect specification judging section 120 will now be briefly described.

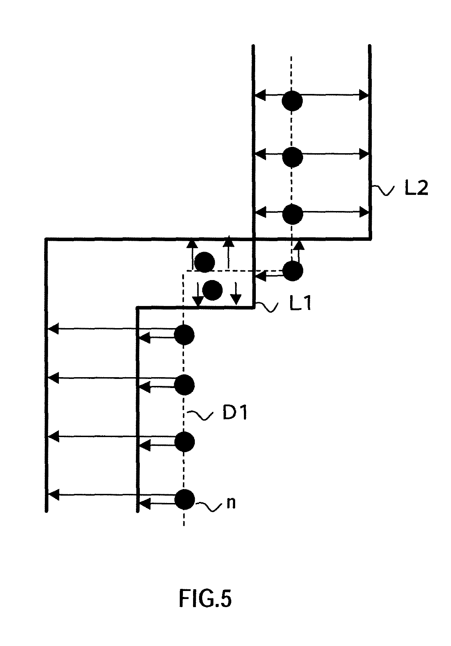

FIG.5 is an explanatory view showing the specification processing of the road in incorrect specification judging section 120.

The road specification processing is normally a process for evaluating the likeliness as a road to be specified by performing pattern matching between the road network data on the digital map and the shape data. The evaluation value representing the likeliness is then calculated, and one or a plurality of candidate roads are specified based on the evaluation value.

As shown in FIG.5, when the shape data D1 including coordinate information of a plurality of nodes n is created by shape data creating section 110, the evaluation value is obtained based on the distance between each node n configuring the shape data D1 and each road L1, L2, ..., on the digital map, and the comparison result of similarity of the road shape etc. to create the candidates of the road.

The evaluation value of the distance is calculated by obtaining the horizontal distance $\Delta Hi$ and the perpendicular distance $\Delta Pi$ between each node n configuring the shape data D1 created by shape data creating section 110 and each road L1, L2, ..., on the digital map, and calculating equation (1) using the horizontal distance $\Delta Hi$ and the perpendicular distance $\Delta Pi$.

$$\text{Evaluation value of distance} = \Sigma(\alpha \cdot \Delta Hi + \beta \cdot \Delta Pi)$$

$$(\text{Equation 1})$$

$\alpha$ and $\beta$ are weighting coefficients with respect to the horizontal distance $\Delta Hi$ and the perpendicular distance $\Delta Pi$, respectively.

With regards to the similarity of the road shape, the road shape is judged as being similar the more the values of the horizontal distance $\Delta Hi$ and the perpendicular distance $\Delta Pi$ with respect to each node n configuring the shape data D1 are constant. Therefore, the degree of similarity of the road shape is obtained based on the values of the horizontal distance $\Delta Hi$ and the perpendicular distance $\Delta Pi$.

Incorrect specification judging section 120 judges that the road is specified if only the evaluation value of one road is high based on the evaluation values of the distance and the road shape. Incorrect specification judging section 120 judges that the road is specified incorrectly if the evaluation values of two or more roads are high and the difference of such evaluation values is small.

When incorrect specification judging section 120 calculates the evaluation value such as the above, and judges that the road is specified based on the calculated value ("NO" in S1120), transmission data creating section 140 adds the data for specifying a more specific position such as the data indicating the distance from the head of the road, degree of congestion etc. to the shape data for specifying the road and creates the transmission data (S1140), and then transmits the transmission data to position information receiving apparatus 200 (S1150).

When incorrect specification judging section 120 specifies two or more roads based on the evaluation values, and judges that there is a possibility of incorrect specification ("YES" in S1120), additional information adding section 130 adds the additional information to the shape data (S1130) and again returns to step S1110. Incorrect specification judging section 120 performs the road specification processing such as pattern matching which is the same as position information receiving apparatus 200 based on the shape data added with the additional information (S1110), and then judges whether or not the road is specified incorrectly on the position information receiving apparatus 200 side (S1120). The processes of steps S1110 to 1130 are continued until incorrect specification judging section 120 judges that the road is not specified incorrectly in S1120.

One example of creating the additional information by additional information adding section 130 will now be described. In the present embodiment, one of the following three methods will be selected.

(1) Additional information obtained by extending the first candidate shape data is added.

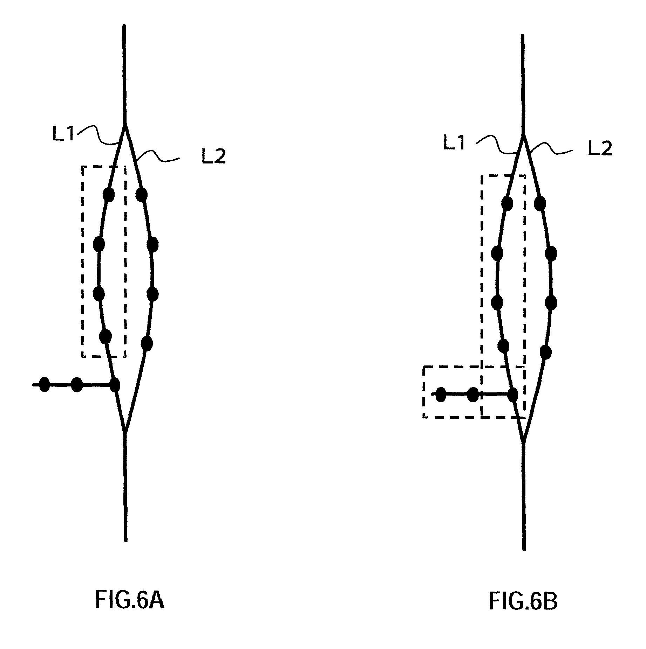

In this method, if the shape data L1 and L2 of the two roads are specified as a result of pattern matching with respect to the shape data including four nodes, as shown in FIG.6A, the first candidate shape data L1 is extended, that is, the coordinate sequence (node sequence) for specifying the road is taken at a wider range so as to generate a difference from the second candidate shape data L2, as shown in FIG.6B, thereby preventing incorrect specification. In the case shown in FIG.6B, the coordinate sequence (node sequence) of the first candidate shape data L1 changes from four to seven by further adding three nodes, whereby the difference is generated with the second candidate shape data L2.

According to this method, the shape data is taken short first, and if there is a possibility of specifying the road incorrectly, the shape data is extended, that is, taken longer so as to specify the first candidate shape data so that the addition of efficient additional information becomes possible.

(2) The coordinate sequence on the second candidate is transmitted as additional information.

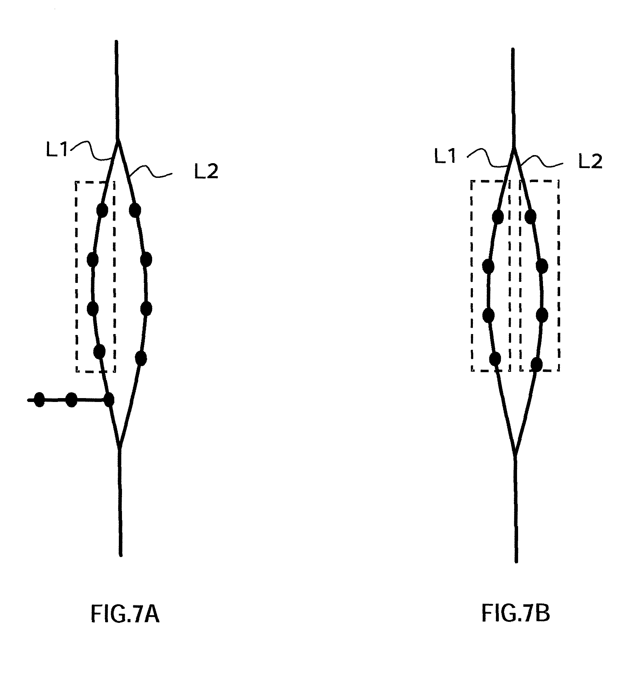

In this method, if the shape data L1 and L2 of two roads are specified as a result of pattern matching with respect to the shape data including four nodes, as shown in FIG.7A, the information of the four nodes configuring the second candidate shape data is transmitted as additional information in addition to the four nodes configuring the first candidate shape data L1, as shown in FIG.7B. A flag or identification information for distinguishing between the first candidate shape data L1 and the second candidate shape data L2 is added.

According to this method, two or more candidate shape data that are easily specified incorrectly are added with flag or identification information for distinguishing first candidate, second candidate, ..., so that the shape data can be reliably distinguished on the receiving side.

(3) The names etc. of the national highway and freeway are created as attribute information for identifying or specifying each road, and the attribute information is transmitted as additional information.

In this method, the attribute information such as "national highway **" and "** freeway ** line " for identifying or specifying the shape data to be transmitted are added as additional information.

According to this method, the attribute information such as the name of the road is added to the two or more candidate shape data that are easily specified incorrectly so that the shape data are reliably distinguished on the receiving side.

With regards to the selecting criteria of the above three methods, each of the additional information is created by three methods of (1) to (3), and if the additional information can be created only with one of the methods, the additional information by the method is transmitted. If the additional information is created by two or more methods, the amount of data of each method is compared, and the additional information with smaller amount of data is selected and transmitted. According to the above, the amount of data of the additional information is made as small as possible, and thus the data can be transmitted to the reception side reliably and rapidly.

Incorrect specification judging section 120 again judges whether or not the road is specified incorrectly (S1120), and when it is judged that the road is specified incorrectly ("YES" in S1120), the additional information is again further added by additional information adding section 130 as described above (S1130), and the road specification processing is again performed. If the road is specified ("NO" in S1120), as with the case that the road is specified without adding additional information, transmission data creating section 140 adds the data for specifying a more specific position, for example, data indicating the distance etc. from the head of the road and the degree of congestion to the shape data for specifying the road, and creates the transmission data (S1140), and data transmission section 150 transmits the transmission data to position information receiving apparatus 200 (S1150).

The operation on the position information receiving apparatus 200 side will now be described.

Position information receiving apparatus 200 periodically checks (S1200) as to whether or not the data is received from position information transmission apparatus 100, and if data is received ("YES" in S1200), the process of receiving the data and the process of analyzing the data content are performed (S1210).

Next, incorrect specification judging section 220 executes the road specification processing by pattern matching process etc. which is the same as the position information transmission apparatus 100 side using the shape data included in the reception data received from position information transmission apparatus 100 (S1220).

Here, in the case of Embodiment 1, when position information transmission apparatus 100 performs the road specification processing which is the same as the position information receiving apparatus 200 side beforehand and specifies the road incorrectly, the additional information is added so as to specify the road, and is transmitted to position information receiving apparatus 200. As a result, position information receiving apparatus 200 can specify the road by referring the additional information.

In position information receiving apparatus 200, display data creating section 230 creates the display data using the road specified by incorrect specification judging section 220 and the data other than the shape data included in the received data, for example, associated data represented by more specific position and degree of congestion (S1230), and data display section 240 displays data created by position information transmission apparatus 100 (S1240).

Therefore, in Embodiment 1, when the shape data is transmitted from position information transmission apparatus 100 to position information receiving apparatus 200, the road specification processing which is the same as the position information receiving apparatus 200 side is performed on the position information transmission apparatus 100 side beforehand. When the road is specified incorrectly, the additional information is added so as to specify the road, and is transmitted to position information receiving apparatus 200. As a result, the information related to the road can be properly exchanged even when the specification of the road is difficult such as when the roads running in the vicinity are present.

The road has been described as an example of the object to be specified in the description of Embodiment 1, but the present invention is by no means limited to this, and may be any object if it is map information that can be specified by shape data on the digitalmap suchas river, railroad, building etc. This is the same for other embodiments to be described below.

Shape data creating section 110 and additional information adding section 130 are separately configured in the description of Embodiment 1, but the present invention is by no means limited to this, and additional information adding section 130 may be arranged in shape data creating section 110 so that shape data creating section 110 functions as additional information adding section 130. In this case, the process of creating the shape data in step S1100 and the process of adding the additional information in step S1130 in the flow chart shown in FIGs.4A and 4B are executed in the same steps. This is the same for other embodiments to be described below.

(Embodiment 2)

The position information exchanging system including the position information transmission apparatus and the position information receiving apparatus according to Embodiment 2 of the present invention will now be described.

In Embodiment 2, the road is reliably specified on the position information receiving apparatus 200 side even when the content of the digital map differs between the position information transmission apparatus 100 side and the position information receiving apparatus 200 side such as when the map data is updated only on the position information receiving apparatus 200 side.

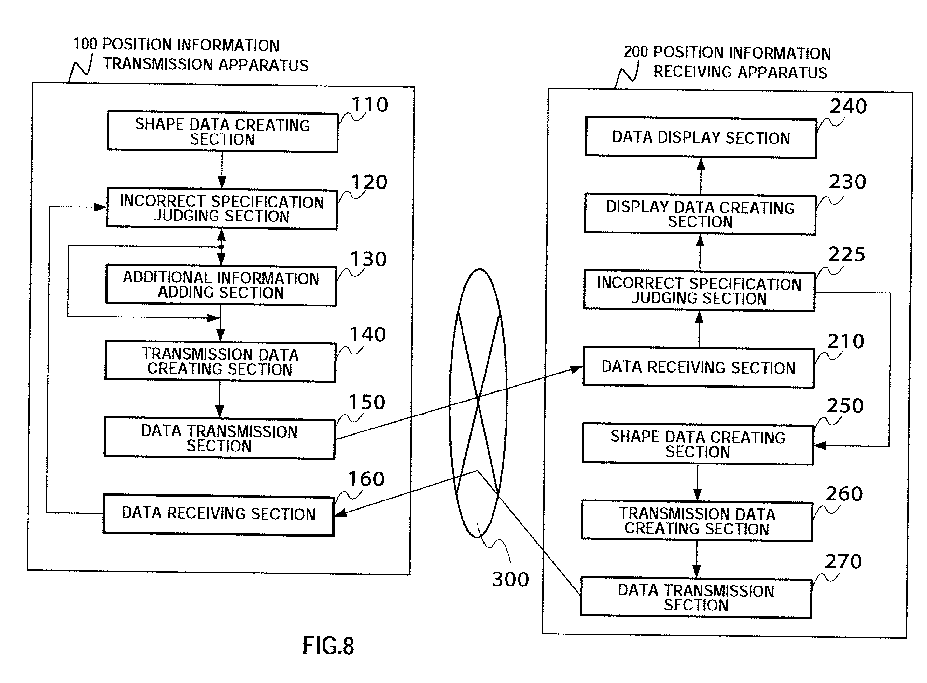

FIG.8 shows a configuration of the position information exchanging system including the position information transmission apparatus and the position information receiving apparatus according to Embodiment 2 of the present invention.

In FIG.8, position information transmission apparatus 100 of Embodiment 2 includes shape data creating section 110, incorrect specification judging section 120, additional information adding section 130, transmission data creating section 140, data transmission section 150, and data receiving section 160.

Data receiving section 160 receives the transmission data including the shape data and the like created on the position information receiving apparatus 200 side. Other configurations are the same as those of Embodiment 1 shown in FIG. 3, and are assigned the same numerals, and the description on the function thereof will be omitted.

Position information receiving apparatus 200 of Embodiment 2 includes data receiving section 210, incorrect specification judging section 225, display data creating section 230, data display section 240, shape data creating section 250, transmission data creating section 260, and data transmission section 270.

As opposed to incorrect specification judging section 220 of position information receiving apparatus 200 of Embodiment 1, incorrect specification judging section 225 not only specifies the road through processes such as pattern matching, but also judges whether or not the road is specified incorrectly in specifying the road, as with incorrect specification judging section 120 of position information transmission apparatus 100 of Embodiment 1.

Shape data creating section 250 has the similar configuration as shape data creating section 110 of position information transmission apparatus 100, and creates the shape data made up of coordinate sequence as the position information for specifying the road using the information of the road and the like on the digital map on the position information receiving apparatus 200 side.

Transmission data creating section 260 creates the transmission data as with transmission data creating section 140 of position information transmission apparatus 100. Data transmission section 270 transmits the created transmission data to position information transmission apparatus 100 by a communication section such as a mobile telephone as with data transmission section 150 of position information transmission apparatus 100. Transmission data creating section 260 is arranged on the position information receiving apparatus 200 side, and the association data associated with the road such as traffic information and route information may not be added to the shape data, as opposed to transmission data creating section 140 of position information transmission apparatus 100.

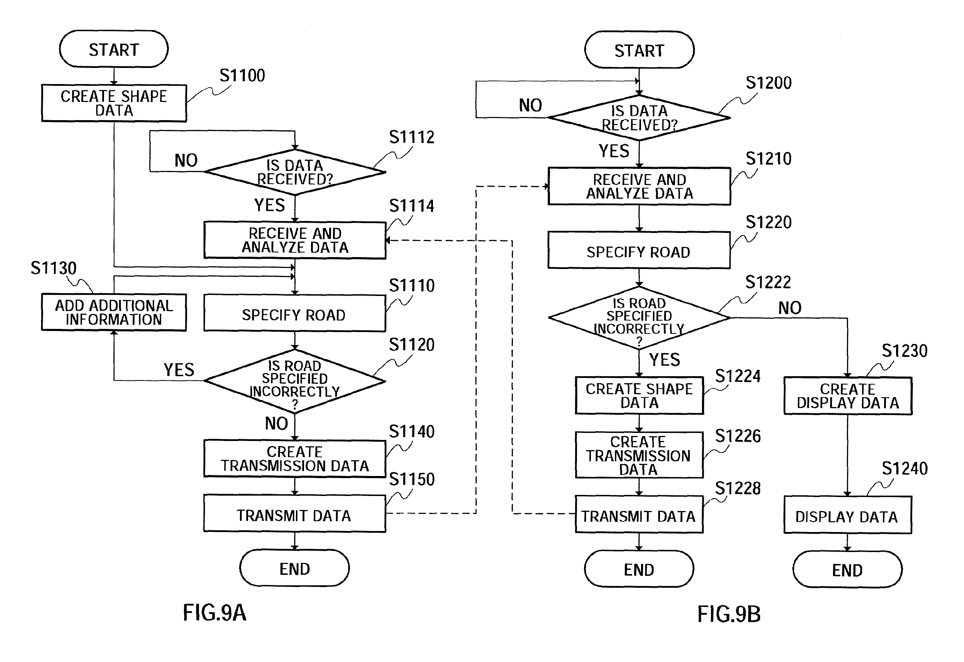

The operation of the position information exchanging system of Embodiment 2 configured as above will now be described using FIG.9.

FIG. 9 is a flow chart illustrating the operation of the position information exchanging system of Embodiment 2. FIG.9A shows the operation of position information transmission apparatus 100 and FIG.9B shows the operation of position information receiving apparatus 200. The operation steps which are the same as the operation of the position information exchanging system of Embodiment 1 shown in FIGs.4A and 4B are assigned the same step numbers, and the operation unique to Embodiment 2 will be mainly described.

In the case of Embodiment 2, as with Embodiment 1, the shape data of the road and the like to be transmitted is created with reference to the digital map on the position information transmission apparatus 100 side through the processes of steps S1100 to S1150 in position information transmission apparatus 100 or the transmitting side apparatus, and the road specification processing which is the same as the position information receiving apparatus 200 side is performed. If there is a possibility where the road is specified incorrectly, the transmission data for specifying the road is created by adding additional information, and then transmitted to position information receiving apparatus 200.

As with the case of Embodiment 1, upon receiving the data (S1210), position information receiving apparatus 200 performs the process of receiving the data and the process of analyzing the data content (S1210), and incorrect specification judging section 225 performs specification of the road (S1220) by pattern matching and the like, as with the position information transmission apparatus 100 side, using the shape data included in the reception data received from position information transmission apparatus 100. The above processes are the same as position information receiving apparatus 200 of Embodiment 1.

Subsequently, as with incorrect specification judging section 120 of position information transmission apparatus 100, incorrect specification judging section 225 of position information receiving apparatus 200 of Embodiment 2 judges whether or not the road is specified incorrectly (S1222).

If the road is specified ("NO" in S1222), display data creating section 230 creates the display data using the shape data of the road specified by incorrect specification judging section 225, and the data other than the shape data contained in the received data such as associated data represented by more specific position, degree of congestion and the like, as with the case of position information receiving apparatus 200 of Embodiment 1 (S1230), and data display section 240 displays the data created in position information transmission apparatus 100 (S1240).

On the other hand, if incorrect specification judging section 225 cannot specify the road and judges that the road is specified incorrectly ("YES" in S1222), shape data creating section 250 of the position information receiving apparatus 200 side creates the shape data of the road specified incorrectly (S1224), and transmission data creating section 260 creates the transmission data added with information indicating the possibility to be specified incorrectly on the position information receiving apparatus 200 side (S1226), and performs data transmission (S1228).

On the position information receiving apparatus 200 side, the cases in which the road is specified incorrectly are as follows. Namely, the new road is added only to the digital map on the position information receiving apparatus 200 side, and the data related to the road does not exist on the digital map on the position information transmission apparatus 100 side, and the shape data of the road in the vicinity of the road is transmitted from position information transmission apparatus 100. In such case, the road may not be specified on the position information receiving apparatus 200 side even if the road specification processing which is the same as on the position information receiving apparatus 200 side is performed on the position information transmission apparatus 100 side beforehand, and judged that there is no possibility that the road is specified incorrectly.

For example, when a plurality of candidate roads exist, and the evaluation values of road specification thereof are similar to each other, the possibility becomes high where the road is specified incorrectly. In particular, when the digital map data differs between position information transmission apparatus 100 and position information receiving apparatus 200, for example, when the new road is added only to the digital map data used on the position information receiving apparatus 200 side by recording media such as CD-ROM, DVD etc. or downloading through network, the road is not necessarily specified on the position information receiving apparatus 200 side even if the road is specified on the position information transmission apparatus 100 side beforehand.

Therefore, when the digital map data differs between position information transmission apparatus 100 and position information receiving apparatus 200 such as when data related to the new road is not present in position information transmission apparatus 100, it is effective to judge whether or not there is a possibility of specifying the road incorrectly in step S1222 after the road specification processing in step S1220 in position information receiving apparatus 200.

When position information receiving apparatus 200 transmits the shape data of the road judged as incorrect specification in incorrect specification judging section 225 to position information transmission apparatus 100, position information transmission apparatus 100 receives the data from position information receiving apparatus 200 ("YES" in S1112), and performs processes of receiving the data and analyzing the data content (S1114).

Position information transmission apparatus 100 then again performs the road specification processing such as pattern matching which is the same as incorrect specification judging section 225 of position information receiving apparatus 200 using the shape data that may be specified incorrectly received from position information receiving apparatus 200 (S1110). Position information transmission apparatus 100 adds additional information so as to specify the road to be originally transmitted, and again performs the road specification processing (S1110) and incorrect specification judging process (S1120), and if the road to be originally transmitted can be specified ("NO" in S1120), the data such as distance from the head of the road, and degree of congestion is added to the shape data for specifying the road to create the transmission data (S1140), and the transmission data is transmitted to position information receiving apparatus 200 (S1150).

The process in position information transmission apparatus 100 of Embodiment 2 of when the shape data of the road that may be specified incorrectly is received from position information receiving apparatus 200 will now be described in detail.

First, position information transmission apparatus 100 performs a first transmission to position informationreceivingapparatus200withoutadditional information added or with additional information added. It is assumed that the shape data to be originally transmitted to position information receiving apparatus 200 is the road A , but position information receiving apparatus 200 that has received the shape data of the road A has specified the roads B and B' incorrectly. In this case, position information receiving apparatus 200 creates the shape data of the roads B and B' that may be specified incorrectly, and returns the shape data to position information transmission apparatus 100 as transmission data.

When position information transmission apparatus 100 receives the shape data of the roads B and B' that may be specified incorrectly from position information receiving apparatus 200, incorrect specification judging section 120 again performs the road specification processing such as matching process which is the same as the position information receiving apparatus 200 side between the shape data of the roads B and B' and the digital map of position information transmission apparatus 100.

It is assumed that incorrect specification judging section 120 specified the road A from the shape data of the road B as a result. The road A is that transmitted to the position information receiving apparatus 200 side as the road to be originally transmitted by position information transmission apparatus 100.

On the other hand, it is assumed that incorrect specification judging section 120 specified the road A' from the shape data of the road B'. The road A' is that specified by position information transmission apparatus 100 based on the road B' with position information receiving apparatus 200 specifying the road B' based on the road A under the situation that the digital map of position information receiving apparatus 200 is updated to the data of the new road rather than the digital map of position information transmission apparatus 100. Therefore, the road A' and the road B' may be different roads.

As a result, position information transmission apparatus 100 specifies the road that may be specified incorrectly such as roads A and A' even if the road specification processing is performed using the shape data of the roads B and B' that may be specified incorrectly transmitted from position information receiving apparatus 200 ("YES" in S1120). In view of such aspect, as with Embodiment 1, one of the three adding processes of additional information, that is, "(1) The additional information obtained by extending the first candidate shape data is added (see FIG.6)", "(2) The coordinate sequence on the second candidate is transmitted as additional information (see FIG.7)" and" (3) Transmit road identification information such as name etc. of the national highway and freeway" is performed on the shape data of the road A to be originally transmitted so as to specify the road A to be originally transmitted in the present embodiment, and again performs the road specification processing (S1110).

Therefore, position information transmission apparatus 100 performs the road specification processing and the additional information adding processing using the shape data of the roads B and B' that may be specified incorrectly transmitted from position information receiving apparatus 200, and if the road is specified ("NO" in S1120), creates the transmission data (S1140) and transmits the data (S1150).

In the case of Embodiment 2, a case is included where the digital map differs between position information transmission apparatus 100 and position information receiving apparatus 200, so that the road is specified more reliably by selecting the additional information adding processing of "(1) The additional information obtained by extending the first candidate shape data is added (see FIG. 6)" or "(3) Transmit road identification information such as name etc. of the national highway and freeway" rather than the process of "(2) The coordinate sequence on the second candidate is transmitted as additional information (see FIG.7)".

However, when the process of "(2) The coordinate sequence on the second candidate is transmitted as additional information (see FIG.7)" is adopted, the transmission data of the road A' is transmitted along with the transmission data of the road A to be originally transmitted specified by performing the additional information adding processing as the data to be transmitted to position information receiving apparatus 200 by position information transmission apparatus 100. Alternatively, the shape data of the road B and the shape data of the road B' received from position information receiving apparatus 200 may be created and transmitted. In this case, a flag and the like indicating that the road A and the road B are the roads to be originally transmitted are added.

In this way, position information transmission apparatus 100 performs the road specification processing using the shape data of the roads B and B' transmitted from position information receiving apparatus 200 and that may be specified incorrectly, and adds the additional information to the shape data of the road A to be originally transmitted, and again transmits the shape data to position information receiving apparatus 200. As a result, position information receiving apparatus 200 performs the road specification processing using the shape data of the road A newly added with additional information, thereby increasing the possibility where the road is specified, compared to the case of only using the shape data of the road A.

When the road that may be specified incorrectly is specified in the second road specification processing, position information receiving apparatus 200 again performs the processes of steps S1222 to S1228, whereby the shape data of the road that may be specified incorrectly is created, and is returned to the position information transmission apparatus 100 side. Namely, position information receiving apparatus 200 urges the position information transmission apparatus 100 to further add the additional information to the returned shape data and transmit the result so as to perform the correct road specification.

Therefore, in Embodiment 2, when position information receiving apparatus 200 judges that the road is specified incorrectly if the road shape data transmitted from position information transmission apparatus 100 is used, the shape data of the road that may be specified incorrectly is created and returned to position information transmission apparatus 100, whereby position information transmission apparatus 100 repeatedly performs the processes of adding additional information to the road shape data and transmitting the result to position information receiving apparatus 200 until the road is specified on the position information receiving apparatus 200 side.

As a result, in Embodiment 2, even if the digital map of the position information transmission apparatus 100 and the digital map of the position information receiving apparatus 200 are different such as when the new road is added only to the digital map of position information receiving apparatus 200, the shape data can be exchanged between position information transmission apparatus 100 and position information receiving apparatus 200 and the additional information may be added to the shape data, so that the road can be specified and displayed inevitably by the shape data from position information transmission apparatus 100 in the position information receiving apparatus 200.

Therefore, according to Embodiment 2, when the shape data is transmitted from position information transmission apparatus 100 to position information receiving apparatus 200, the road specification processing which is the same as the position information receiving apparatus 200 side is performed on the position information transmission apparatus 100 side beforehand. Then, if the road that may be specified incorrectly is specified, the additional information is added so that the road can be specified and the the result is transmitted to position information receiving apparatus 200, as with Embodiment 1. As a result, it is possible to properly exchange the information related to the road even when the specification of the road is difficult such as when roads running in parallel exist in the vicinity.

Further, in Embodiment 2, when it is judge that the road is specified incorrectly if the road shape data sent from position information transmission apparatus 100 is used, position information receiving apparatus 200 creates the shape data of the road that may be specified incorrectly and returns the shape data to position information transmission apparatus 100, and position information transmission apparatus 100 repeats the processes of adding additional information to the road shape data and transmitting the result to position information receiving apparatus 200 until the road is specified on the position information receiving apparatus 200 side. By this means, the road is specified and displayed reliably even when the content of the digital map differs between the position information transmission apparatus 100 side and the position information receiving apparatus 200 side such as when the map data is updated only on the position information receiving apparatus 200 side.

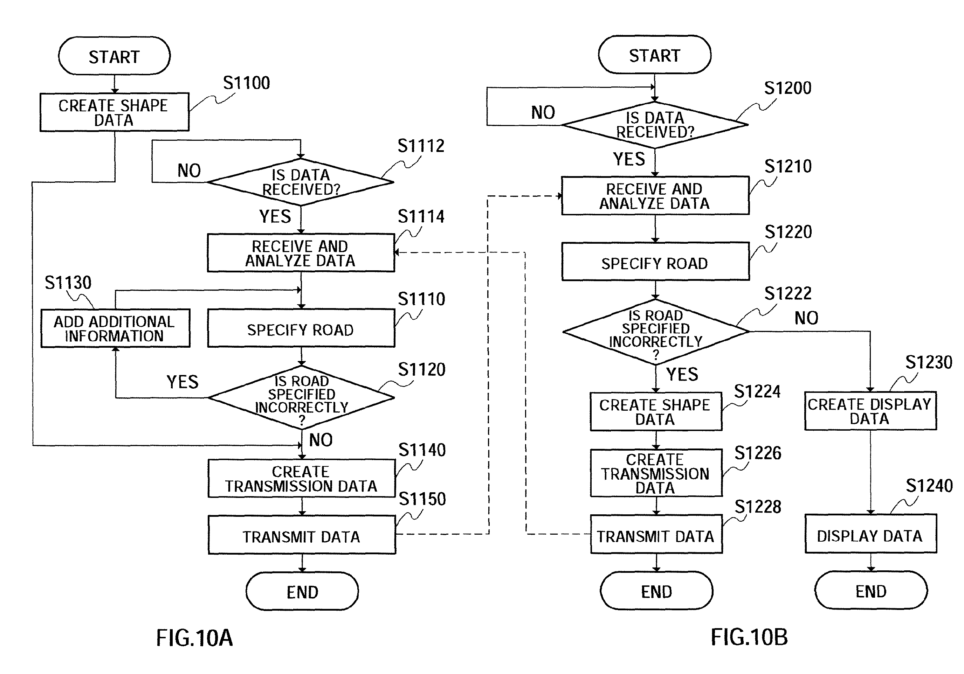

In the description of Embodiment 2, position information transmission apparatus 100 necessarily performs the road specification processing which is the same as the position information receiving apparatus 200 side when the shape data is created and transmitted first, as shown in the flow chart of FIG. 9A. However, the present invention is by no means limited to this, and for example, the flow chart as shown in FIG.10A may be possible.

That is, when the shape data is created and transmitted first, the road specification processing is not performed. Next, position information receiving apparatus 200 then specifies the road that may be specified incorrectly, and transmits the shape data of the relevant road that may be specified incorrectly. Position information transmission apparatus 100 performs the road specification processing using the map data that may be specified incorrectly only when the shape data of the road that may be specified incorrectly is transmitted, judges whether or not the road is specified incorrectly, adds the additional information to the road shape data and transmits the result shape data when it is judged that that the road is specified incorrectly. In this way, the road specification processing is performed on the position information transmission apparatus 100 side only when the road that may be specified incorrectly is specified in position information receiving apparatus 200 and when the shape data of the road that may be specified incorrectly is returned, so that it is not necessary to judge whether or not there is incorrect specification when the shape data is transmitted, thereby reducing the burden of the road specification processing on the position information transmission apparatus 100 side.

(Embodiment 3)

A position information exchanging system including a position information transmission apparatus and a position information receiving apparatus according to Embodiment 3 of the present invention will now be described.

In the position information exchanging system of Embodiment 3, position information transmission apparatus 100 of the position information exchanging system of Embodiment 1 is modified.

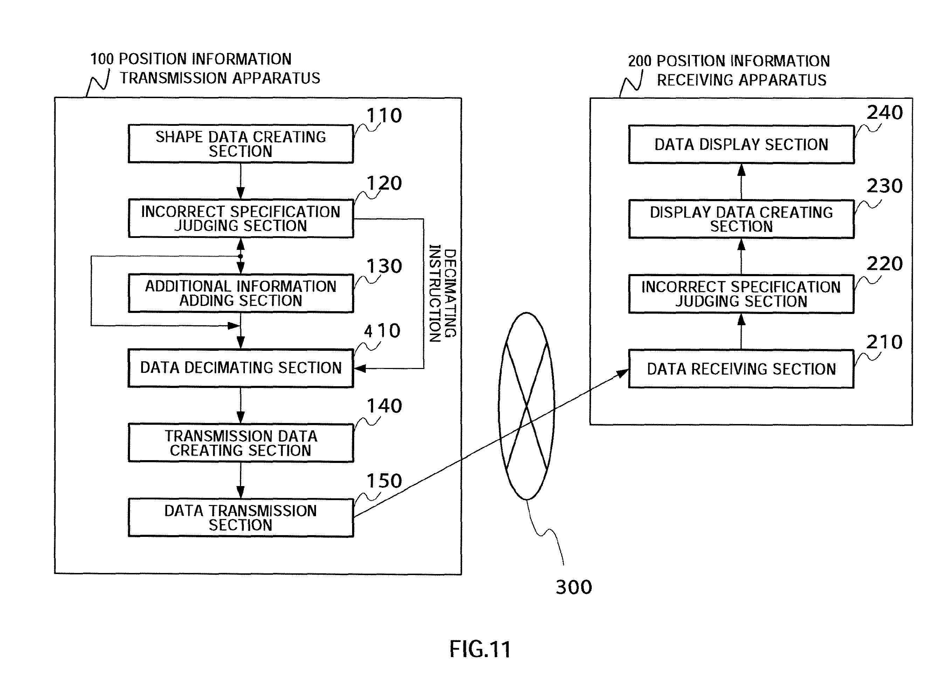

FIG.11 shows the configuration of the position information exchanging system including the position information transmission apparatus and the position information receiving apparatus according to Embodiment 3 of the present invention.

In FIG.11, the position information system of Embodiment 3 includes position information transmission apparatus 100 and position information receiving apparatus 200. Position information transmission apparatus 100 includes shape data creating section 110, incorrect specification judging section 120, adding information adding section 130, transmission data crating section 140, and data transmission section 150, as with position information transmission apparatus 100 of Embodiment 1 shown in FIG.3. In addition to the above, position information transmission apparatus 100 includes data decimating section 410. The configuration of the position information receiving apparatus 200 side is the same as with Embodiment 1 shown in FIG.3.

The operation of the position information exchanging system according to Embodiment 3 configured as above will now be described.

In the case of Embodiment 3, when judging that there is no possibility of incorrect judgment or the possibility of incorrect judgment is low on the position information receiving apparatus 200 side such as when there is only one candidate road, incorrect specification judging section 120 indicates decimation process on data decimating section 410.

Data decimating section 410 decimates the coordinate sequence, that is, the coordinate information of the shape data created by shape data creating section 110 based on the decimating instruction from incorrect specification judging section 120. As a result, the data size of the transmission data is reduced by roughening the shape data.

By this means, according to Embodiment 3, when other roads that may cause incorrect specification of the road do not exist, the data size of the transmission data can be reduced without degrading the performance of specifying the position without adding additional information and then by decimating the coordinate information of the shape data included in the transmission data.

In Embodiment 3, a case has been described where incorrect specification judging section 120 performs the decimating process upon judging the possibility of the incorrect judgment on the position information receiving apparatus 200 side, based on the evaluation value of the candidate road. However, the present invention is by no means limited to this, and the configuration is possible where, for example, the shape data is decimated by data decimating section 410 when additional information adding section does not add additional information, and there is a possibility of the incorrect judgment on the position information receiving apparatus 200 side when additional information adding section 130 adds the additional information, so that the decimating processing by data decimating section 410 is not performed.

Furthermore, in Embodiment 3, a case has been described where data decimating section 410 is arranged in position information transmission apparatus 100 of Embodiment 1 with the configuration shown in FIG.3. However, the present invention is by no means limited to this, and data decimating section 410 may be arranged in position information transmission apparatus 100 of Embodiment 2 with the configuration shown in FIG.8, ormaybe arranged on the position information receiving apparatus 200 side of Embodiments 1 and 3 shown in FIGs.3 and 8.

(Embodiment 4)

A position information exchanging system including a position information transmission apparatus and a position information receiving apparatus according to Embodiment 4 of the present invention will now be described.

In the position information exchanging system of Embodiment 4, a transmission apparatus of position information transmission apparatus 100 of the position information exchanging system of Embodiment 1 is modified.

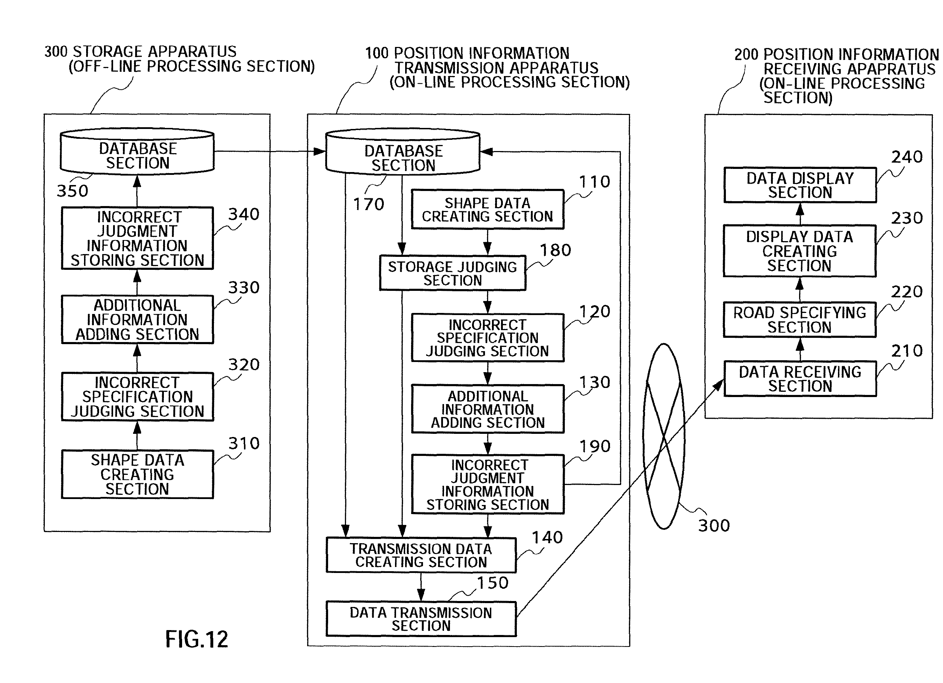

FIG.12 shows a configuration of the position information exchanging system including the position information transmission apparatus, the position information receiving apparatus and an stoage apparatus according to Embodiment 4 of the present invention.

In FIG.12, the position information exchanging system of Embodiment 4 includes position information transmission apparatus 100, position information receiving apparatus 200, and storage apparatus 300. Position information transmission apparatus 100 of the present embodiment is configured by adding database section 170, storage judging section 180, and incorrect judgment information storing section 190 to the configuration which is the same as position information transmission apparatus 100 of Embodiment 1 shown in FIG.3, that is, the configuration including shape data creating section 110, incorrect specification judging section 120, additional information adding section 130, transmission data creating section 140 and data transmission section 150.

Storage apparatus 300 includes shape data creating section 310, incorrect specification judging section 320, additional information adding section 330, incorrect judgment information storing section 340, and database section 350. Shape data creating section 310, incorrect specification judging section 320, additional information adding section 330, incorrect judgment information storing section 340, and database section 350 have the same function as shape data creating section 110, incorrect specification judging section 120, additional information adding section 130, incorrect judgment information storing section 190, and database section 170 in position information transmission apparatus 100. Therefore, the processes of shape data creating section 310, incorrect specification judging section 320, additional information adding section 330, incorrect judgment information storing section 340, and database section 350 may be realized by using shape data creating section 110, incorrect specification judging section 120, additional information adding section 130, incorrect judgment information storing section 190, and database section 170 in position information transmission apparatus 100. The configuration of the position information receiving apparatus 200 side is the same as that in Embodiment 1 shown in FIG.3.

Storage apparatus 300 stores the information related to an object that may be judged incorrectly on the receiving side in database section 350 by the off-line process. Therefore, storage apparatus 300 can also be referred to as off-line processing section. The information stored in database section 350 of storage apparatus 300 is handed over to database section 170 of position information transmission apparatus 100.

Position information transmission apparatus 100 creates the transmission data based on the information related to the object stored in database section 170 by on-line process, and transmits the transmission data. By this means, the information related to the object that may be specified incorrectly is stored in database section 170 beforehand, and additional information is added only when the object to be transmitted exists in database section 170, whereby the incorrect specification judging process and the process of creating additional information are not required when the shape data is transmitted, thereby reducing the processing burden by such amount.

In other words, storage judging section 180 judges whether or not the information of the incorrectly judged object is included in database section 170. When storage judging section 180 judges that the information of the incorrectly judged object is contained, transmission data creating section 140 creates the transmission data including the shape data related to the incorrectly judged object stored in database section 170 and the additional information for specifying the incorrectly judged object.

By this means, the processes that needs to be performed by on-line are only the process of judging whether or not the information of the incorrectly judged object is included in database section 170 and the process of creating the transmission data, thereby reducing the processing burden at on-line.

That is, in the configuration shown in FIG.12, position information transmission apparatus 100 is shown including shape data creating section 110, the incorrect specification judging section 120, and additional information adding section 130 in addition to database section 170, storage judging section 180, transmission data creating section 140 and data transmission section 150, but shape data creating section 110, incorrect specification judging section 120 and additional information adding section 130 may be omitted.

In the configuration shown in FIG.12, when storage judging section 180 judges that the information of the incorrectly judged object is not included in database section 170, incorrect specification judging section 120 again judges whether or not the object is specified incorrectly, and when it is judged that the object is specified incorrectly, the additional information for specifying the incorrectly judged object is added to the shape data by additional information adding section 130. As a result, when the shape data of the object is created based on the map data and the like, the map data and the version of the information stored in database section 170 may differ and a case may occur where the object that may be specified incorrectly is not necessarily stored in database section 170, but incorrect specification may be detected in such case.

Furthermore, in the configuration shown in FIG.12, when storage judging section 180 judges that the information of the incorrectly judged object is not contained in database section 170, incorrect specification judging section 120 again judges whether or not the object is specified incorrectly, and when it is judged that the object is specified incorrectly, the information related to the incorrectly judged object is added and stored in database section 170. By this means, when the shape data of the object is created based on the map data and the like, the map data and the version of the information stored in database section 170 may differ and a case may occur where the object that may be specified incorrectly is not necessarily stored in database section 170, but the newly detected object that is specified incorrectly can be added to database section 170 so that it is possible to constantly update the stored information of database section 170 to new information.

The operation of the position information exchanging system of Embodiment 4 configured as in FIG.12 will now be described.

(Off-line process)

In the case of Embodiment 4, the incorrect specification judgment is performed on all or part of the shape data in storage apparatus 300, and shape data, additional information and the like are created as the information related to the object for the incorrectly judged object, and stored in database section 350.

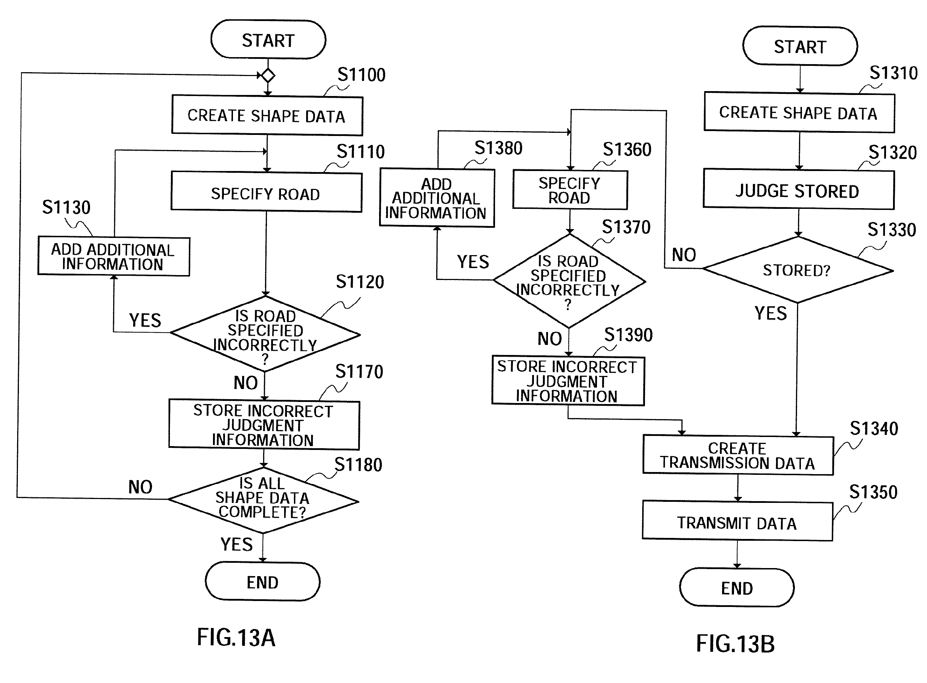

FIG.13A shows the off-line process of storage apparatus 300. First, shape data creating section 310 creates the shape data (S1100), incorrect specification judging section 320 specifies the road and the like as the object through pattern matching and the like (S1110) and judges whether the specified object is specified incorrectly (S1120). When it is judged that there is a possibility of incorrect specification ("YES" in S1120), additional information adding section 330 adds additional information to the shape data (S1130), and the process again returns to step S1110, and incorrect specification judging section 320 performs specification processing such as pattern matching which is the same as the position information receiving apparatus 200 side based on the shape data added with additional information (S1110), and judges whether or not incorrect specification is found on the position information receiving apparatus 200 side (S1120). The processes of steps S1110 to 1130 are continued until incorrect specification judging section 320 judges that there is no possibility of incorrect specification.

When incorrect specification judging section 320 judges that there is no possibility of incorrect specification ("NO" in S1120), the additional information (incorrect judgment information) added by additional information adding section 330 and the shape data are stored in incorrect judgment information storing section 340 (S1170). Incorrect judgment information storing section 340 transmits the stored additional information (incorrect judgment information) and the shape data to database section 350.

In step S1180, it is judged whether or not the above described processes have been completed for all shape data, and the process returns to step S1100 if not completed, and the process ends if completed.

(On-line process)

When the position information of the object is transmitted, storage judging section 180 judges whether or not the object is stored in database section 170, and if the object is stored, the transmission data is created and transmitted using the information stored in database section 170. As a result, incorrect specification judging process and the process of creating the adding information are not required when transmitting the shape data, thereby reducing the processing burden by such amount.

When storage judging section 180 judges that the transmitting object is not stored in database section 170, the incorrect specification judging process is performed, and if incorrect specification is found, additional information is added and the data is updated, as with Embodiment 1. The incorrect specification information is additionally stored in database section 170. By this means, the content of database section 170 can be updated to new information.

FIG.13B shows the on-line process of the position information transmission apparatus 100. First, the shape data is created by shape data creating section 110 (S1310), and storage judging section 180 judges whether or not the information corresponding to the shape data is stored in database section 170 (S1320 and S1330). When the information is stored, the process proceeds to step S1340, and the transmission data is created from the information stored in the database in transmission data creating section 140, and the transmission data is transmitted in data transmission section 150 in step S1350.

If storage judging section 180 judges that the information corresponding to the shape data is not stored in database section 170 in step S1330, the process proceeds to step S1360. In step S1360, upon specifying the road and the like as the object through pattern matching and the like, incorrect specification judging section 120 judges whether or not the specified object is specified incorrectly in the following step S1370. If it is judged that there is a possibility of incorrect specification ("YES"inS1370), additional information adding section 130 adds the additional information to the shape data (S1380), and the process again returns to step S1360. The processes of steps S1360 to 1380 are continued until incorrect specification judging section 120 judges that there is no possibility to be specified incorrectly.

When incorrect specification judging section 120 judges that there is no possibility of incorrect specification ("NO" in S1370), the additional information (incorrect judgment information) added by additional information adding section 130 and the shape data are stored in incorrect judgment information storing section 190 (S1390). Incorrect judgment information storing section 190 transmits the stored additional information (incorrect judgment information) and the shape data to database section 170.

In this way, according to Embodiment 4, the incorrect specification judging process and the process of creating additional information are not required at on-line process and the processing burden is reduced by such amount in addition to the effects of Embodiment 1 by arranging database section 170 for storing the information related to the object specified incorrectly by incorrect specification judging section 320 beforehand, storage judging section 180 for judging whether or not the incorrect judgment information about the object to be transmitted is included in database section 170, and data transmission section 150 for transmitting the shape data regarding the incorrectly judged object and the additional information for specifying the incorrectly judged object stored in database section 170.

As described above, one aspect of the position information transmission apparatus of the present invention is a position information transmission apparatus for transmitting shape data indicating an object on a map to a position information receiving apparatus, and causing the position information receiving apparatus perform a specification processing using the shape data to specify the object, the position information transmission apparatus including an incorrect specification judging section for performing a specification processing which is the same as the specification processing on the position information receiving apparatus side using the shape data to judge whether or not the object is specified incorrectly, an adding section for adding additional information for specifying the object to the shape data when the incorrect specification judging section judges that the object is specified incorrectly; and a transmission section for transmitting the shape data added with the additional information to the position information receiving apparatus.

According to this configuration, a matching process which is the same as the matching process on the position information receiving apparatus side is performed using the shape data, and when it is judged that the object is specified incorrectly, additional information is added to the shape data so as to allow specification of the object and then transmitted, so that the object is specified accurately with the received additional information and the shape data in the position information receiving apparatus even if an object of a similar shape exists in the vicinity.

One aspect of the position information transmission apparatus of the present invention includes the configuration in which the incorrect specification judging section performs the specification processing to judge whether or not the object is specified incorrectly when the shape data tobe transmitted to the position information receiving apparatus is created and transmitted, and when the information indicating that the object is specified incorrectly is received from the position information receiving apparatus in the above configuration.

According to this configuration, the position information receiving apparatus judges whether or not the object is specified incorrectly not only when the shape data is created and transmitted, but also when the information indicating that the object is specified incorrectly is received from the position information receiving apparatus, so that the object is more specified reliably from the received shape data in the position information receiving apparatus even if an object having a similar shape is present in the vicinity.

One aspect of the position information transmission apparatus of the present invention includes the configuration in which the incorrect specification judging section performs the specification processing to judge whether or not the object is specified incorrectly only when the information indicating that the object is specified incorrectly is received from the position information receiving apparatus in the above configuration.

According to this configuration, it is judged whether or not the road is specified incorrectly in the position information transmission apparatus only when information indicating that the object is specified incorrectly is received from the position information receiving apparatus, and additional information is added according to the result, and thus the incorrect specification judging process is not required to be constantly performed when transmitting the shape data, thereby reducing the burden of the incorrect specification process.

Another aspect of the position information transmission apparatus of the present invention includes the configuration in which the adding section adds the shape data of the portion extended from the shape data as additional information to the shape data so as to create a difference between the object indicated by the shape data to be transmitted and another specified object when the incorrect specification judging section judges that the object is specified incorrectly in the above configuration.

According to this configuration, when it is judged that the object is specified incorrectly, the shape data of the portion extended from the shape data is added as additional information to the shape data so as to create a difference between the object indicated by the shape data to be transmitted and another specified object, so that the difference from another object is recognized on the position information receiving apparatus side when the shape data is received.

Another aspect of the position information transmission apparatus of the present invention includes the configuration in which the adding section adds shape data of other specified object as the additional information to the shape data to be transmitted when the incorrect specification judging section judges that the object is specified incorrectly in the above configuration.

According to this configuration, when it is judged that the object is specified incorrectly, the shape data of another specified object is added as the additional information to the shape data to be transmitted, so that the difference from another object is recognized on the position information receiving apparatus side when the shape data is received.

Another aspect of the position information transmission apparatus of the present invention includes the configuration in which the adding section adds attribute information of the object indicated by the shape data as the additional information to the shape data to be transmitted when the incorrect specification judging section judges that the object is specified incorrectly in the above configuration.

According to this configuration, when it is judged that the object is specified incorrectly, the attribute information of the object indicated by the shape data is added as the additional information to the shape data to be transmitted, so that the difference from another object is recognized on the position information receiving apparatus side when the shape data is received.

Another aspect of the position information transmission apparatus of the present invention includes the configuration further including a decimating section for decimating a coordinate sequence of the shape data to be transmitted to reduce transmission data size when it is judged that the object is not specified incorrectly.

According to this configuration, when it is judged that the object is not specified incorrectly, the coordinate sequence of the shape data to be transmitted is decimated to reduce the transmission data size and then transmitted, thereby reducing the data size of the transmission data without degrading the performance of specifying the object.

Another aspect of the position information transmission apparatus of the present invention is a position information transmission apparatus for transmitting shape data indicating an object on a map to a position information receiving apparatus, and causing the position information receiving apparatus perform a specification processing using the shape data to specify the object, the position information transmission apparatus including an incorrect specification judging section for performing a specification processing which is the same as the specification processing on the position information receiving apparatus side using the shape data to judge whether or not the object is specified incorrectly, a storage section for storing the information related to the object incorrectly judged by the incorrect specification judging section as a database beforehand, a storage judging section for judging whether or not incorrect judgment information about the transmitting obj ect is included in the storage section when the shape data indicating the object is transmitted, and a transmission section for transmitting the shape data related to the incorrectly judged object stored in the storage section and additional information for specifying the incorrectly judged object to the position information receiving apparatus when the storage judging section judges that the incorrect judgment information about the transmitting object is included.

According to this configuration, in the position information transmission apparatus, the information related to the object that may be specified incorrectly is stored in the storage section beforehand, and additional information is added only when the incorrect judgment information about the transmitting object is present in the storage section, whereby the incorrect specification judging process and the process of creating the additional information are not required when the shape data is transmitted, thereby reducing processing burden by such amount.

Another aspect of the position information transmission apparatus of the present invention includes the configuration in which when the storage judging section judges that the incorrect judgment information about the transmitting object is included in the storage section, the incorrect specification judging section again judges whether or not the transmitting object is specified incorrectly, and when it is judged that the transmitting object is specified incorrectly, the transmission section adds additional information for specifying the incorrectly judged object to the shape data, and transmits the data to the position information receiving apparatus.

According to this configuration, in the position information transmission apparatus, the information related to the object that may be specified incorrectly in the storage section beforehand and the additional information is added only when the incorrect judgment information about the transmitting object is present in the storage section, whereby the incorrect specification judging process and the process of creating the additional information are required when the shape data is transmitted, thereby reducing processing load by such amount. Furthermore, when the shape data of the object is created based on the map data and the like, the versions of the map data serving as the basis for the current transmission and the map data serving as the basis for the information stored in the storage section differ, and the object that may be specified incorrectly is not necessarily stored in the storage section, but it is possible to detect incorrect judgment in such case.

Another aspect of the position information transmission apparatus of the present invention includes the configuration in which when the storage judging section judges that the incorrect judgment information about the transmitting object is not included in the storage section, the incorrect specification judging section again judges whether or not the transmitting object is specified incorrectly, and when it is judged that the transmitting object is specified incorrectly, the information related to the incorrectly judged object is added and stored in the storage section.

According to this configuration, when the shape data of the object is created based on the map data and the like, the versions of the map data serving as the basis for the current transmission and the map data serving as the basis for the information stored in the storage section differ, and the object that may be specified incorrectly is not necessarily stored in the storage section, but the incorrectly judged object that is newly detected can be added to the storage section, thereby updating the storage section to new information constantly.

One aspect of the position information receiving apparatus of the present invention is a position information receiving apparatus for receiving shape data indicating object on a map transmitted by a position information transmission apparatus; the position information receiving apparatus including an incorrect specification judging section for executing a specification processing using the shape data to judge whether or not the object is specified incorrectly; a data creating section for creating shape data of the object to be a target of incorrect specification with the information indicating incorrect specification when the incorrect specification section judges that the object is specified incorrectly, and a transmission section for transmitting information indicating incorrect specification and the shape data to the position information transmission apparatus.

According to this configuration, in the position information receiving apparatus side, when it is judged that theobjectmaybe specified incorrectly, the information indicating specification and the shape data are transmitted to the position information transmission apparatus, whereby the position information transmission apparatus performs the matching process which is the same as the matching process on the position information receiving apparatus side using the above information, and adds the additional information to allow specification of the object to the shape data and transmits the data when it is judged that the object may be specified incorrectly.

One aspect of the position information transmitting method of the present invention is a method of transmitting position information when transmitting shape data indicating an object on a map to a position information receiving apparatus, and causing the position information receiving apparatus perform a specification processing using the shape data to specify the object, the method including the steps of executing a specification processing which is the same as the specification processing on the position information receiving apparatus side using the shape data to judge whether or not the object is specified incorrectly, and adding additional information for specifying the object indicated by the shape data to the shape data to transmit to the position information receiving apparatus when it is judged that the object is specified incorrectly.

According to this method, the object is specified accurately with the shape data on the position information receiving apparatus side even if an object of similar shape exists in the vicinity.

One aspect of a program for transmitting position information of the present invention is a program for causing a computer to transmit shape data indicating an object on a map to a position information receiving apparatus, and causing the position information receiving apparatus perform a specification processing using the shape data to specify the object, the program for causing the computer to execute the steps of executing a specification processing which is the same as the specification processing on the position information receiving apparatus side using the shape data to judge whether or not the object is specified incorrectly, and adding additional information for specifying the object indicated by the shape data to the shape data to transmit to the position information receiving apparatus when it is judged that the object is specified incorrectly.

According to this program, the object is specified accurately with the shape data on the position information receiving apparatus side even if an object of similar shape exists in the vicinity.

This application is based on Japanese Patent Application No.2004-228555 filed on August 4, 2004 and Japanese Patent Application No.2005-213293 filed on July 22, 2005, the entire content of which is expressly incorporated herein by reference.

Industrial Applicability

The position information exchanging system using the position information transmission apparatus, the position information receiving apparatus ,the position information transmitting method, and the position information transmitting program according to the present invention provides advantage in that the position information indicating the object is transmitted and the object is specified accurately from the position information about the receiving side even if an object of similar shape exists in the vicinity, and is suitable for use in a system for accurately transmitting information related to the position on the digital map such as traffic information including traffic accident, road work, congestion, regulation, restaurants, POI (Point of Interest) information of parking area and the like, in-vehicle terminal such as a car navigation system, mobile terminal such as a mobile telephone, PDA, and personal computer, and furthermore, the position information transmission apparatus, the position information receiving apparatus, the position information transmitting method and the position information transmitting program in a center system and the like such as a traffic control system for collecting, generating, and transmitting traffic information.

**Claims**

1. A position information transmission apparatus for transmitting shape data indicating an object on a map to a position information receiving apparatus, and causing the position information receiving apparatus perform a specification processing using the shape data to specify the object, the position information transmission apparatus comprising:

   an incorrect specification judging section for performing a specification processing which is the same as the specification processing on the position information receiving apparatus side using the shape data, to judge whether or not the object is specified incorrectly;
   an adding section for adding additional information for specifying the object to the shape data when the incorrect specification judging section judges that the object is specified incorrectly; and

a transmission section for transmitting the shape data added with the additional information to the position information receiving apparatus.

2. The position information transmission apparatus according to claim 1, wherein the incorrect specification judging section performs the specification processing to judge whether or not the object is specified incorrectly when the shape data to be transmitted to the position information receiving apparatus is created and transmitted, and when the information indicating that the object is specified incorrectly is received from the position information receiving apparatus.

3. The position information transmission apparatus according to claim 1, wherein the incorrect specification judging section performs the specification processing to judge whether or not the object is specified incorrectly only when the information indicating that the object is specified incorrectly is received from the position information receiving apparatus.

4. The position information transmission apparatus according to claim 1, wherein the adding section adds the shape data of the portion extended from the shape data as additional information to the shape data so as to create a difference between the object indicated by the shape data to be transmitted and another specified object when the incorrect specification judging section judges that the object is specified incorrectly.

5. The position information transmission apparatus according to claim 1, wherein the adding section adds shape data of another specified object as the additional information to the shape data to be transmitted when the incorrect specification judging section judges that the object is specified incorrectly.

6. The position information transmission apparatus according to claim 1, wherein the adding section adds attribute information of the object indicated by the shape data as the additional information to the shape data to be transmittedwhen the incorrect specification judging section judges that the object is specified incorrectly.

7. The position information transmission apparatus according to claim 1, further comprising a decimating section for decimating a coordinate sequence of the shape data to be transmitted to reduce transmission data size when it is judged that the object is not specified incorrectly.

8. A position information transmission apparatus for transmitting shape data indicating an object on a map to a position information receiving apparatus, and causing the position information receiving apparatus perform a specification processing using the shape data to specify the object, the position information transmission apparatus comprising:

an incorrect specification judging section for performing a specification processing which is the same as the specification processing on the position information receiving apparatus side using the shape data, to judge whether or not the object is specified incorrectly;
a storage section for storing the information related to the object incorrectly judged by the incorrect specification judging section as a database beforehand;
a storage judging section for judging whether or not incorrect judgment information about the transmitting object is included in the storage section when the shape data indicating the object is transmitted; and
a transmission section for transmitting the shape data related to the incorrectly judged object stored in the storage section and additional information for specifying the incorrectly judged object to the position information receiving apparatus when the storage judging section judges that the incorrect judgment information about the transmitting object is included.

9. The position information transmission apparatus according to claim 8, wherein, when the storage judging section judges that the incorrect judgment information about the transmitting object is not included in the storage section, the incorrect specification judging section again judges whether or not the transmitting object is specified incorrectly, and when it is judged that the transmitting object is specified incorrectly as a result , the transmission section adds additional information for specifying the incorrectly judged object to the shape data, and transmits the data to the position information receiving apparatus.

10. The position information transmission apparatus according to claim 8, wherein, when the storage judging section judges that the incorrect judgment information about the transmitting object is not included in the storage section, the incorrect specification judging section again judges whether or not the transmitting object is specified incorrectly, and when it is judged that the transmitting object is specified incorrectly, information about the incorrectly judged object is added and stored in the storage section.

11. The position information transmission apparatus according to claim 8, wherein:

a process of executing a specification processing which is the same as the specification processing on the position information receiving apparatus side using the shape data to judge whether or not the object is specified incorrectly by the incorrect specification judging section, and a process of storing the information related to the object incorrectly judged by the incorrect specification judging section beforehand as database by the storage section are performed beforehand off-line; and

a process of judging whether or not incorrect judgment information about the transmitting object is included in the storage section by the storage judging section when the shape data indicating the object is transmitted, and a process of transmitting the shape data related to the incorrectly judged object stored in the storage section and additional information for specifying the incorrectly judged object to the position information receiving apparatus, by the transmission section when the storage judging section judges that the incorrect judgment information about the transmitting object is included are performed on-line.

12. The position information transmission apparatus according to claim 9, wherein:

a process of executing a specification processing which is the same as the specification processing on the position information receiving apparatus side using the shape data to judge whether or not the object is specified incorrectly by the incorrect specification judging section, and a process of storing the information related to the object incorrectly judged by the incorrect specification judging section beforehand as database by the storage section are performed beforehand off-line; and

a process of judging whether or not incorrect judgment information about the transmitting object is included in the storage section by the storage judging section when the shape data indicating the object is transmitted, and a process of again judging whether or not the transmitting object is specified incorrectly by the incorrect specification judging section when the storage judging section judges that the incorrect judgment information about the transmitting object is not included in the storage section, and adding additional information for specifying the incorrectly judged object to the shape data to transmit to the position information receiving apparatus when it is judged that the transmitting object is specified incorrectly as a result, are performed on-line.

13. The position information transmission apparatus according to claim 10, wherein:

a process of executing a specification processing which is the same as the specification processing on the position information receiving apparatus side using the shape data to judge whether or not the object is specified incorrectly by the incorrect specification judging section, and a process of storing the information related to the object incorrectly judged by the incorrect specification judging section beforehand as database by the storage section are performed beforehand off-line; and

a process of judging whether or not the incorrect judgment information about the transmitting object is included in the storage section by the storage judging section when the shape data indicating the object is transmitted, and a process of again judging whether or not the transmitting object is specified incorrectly by the incorrect specification judging section when the storage judging section judges that the incorrect judgment information about the transmitting object is not included in the storage section, and additionally storing the information related to the incorrectly judged object to the storage section when it is judged that the transmitting object is specified incorrectly as a result are performed on-line.

14. A position information receiving apparatus for receiving shape data indicating object on a map transmitted by a position information transmission apparatus, the position information receiving apparatus comprising:

an incorrect specification judging section for executing a specification processing using the shape data to judge whether or not an object is specified incorrectly;

a data creating section for creating shape data of the object to be a target of incorrect specification with the information indicating incorrect specification when the incorrect specification section judges that the object is specified incorrectly ; and

a transmission section for transmitting information indicating the incorrect specification and the shape data to the position information transmission apparatus.

15. A method of transmitting position information of when transmitting shape data indicating an object on a map to a position information receiving apparatus, and causing the position information receiving apparatus perform a specification processing using the shape data to specify the object, the method comprising the steps of:

executing a specification processing which is the same as the specification processing on the position information receiving apparatus side using the shape data to judge whether or not the object is specified incorrectly; and adding additional information for specifying the object indicated by the shape data to the shape data to transmit to the position information receiving apparatus when it is judged that the object is specified incorrectly.

16. A program for causing a computer to transmit shape data indicating an object on a map to a position information receiving apparatus, and causing the position information receiving apparatus perform a specification processing using the shape data to specify the object; the program for causing the computer to execute the steps of:

executing a specification processing which is the same as the specification processing on the position information receiving apparatus side using the shape data to judge whether or not the object is specified incorrectly; and adding additional information for specifying the object indicated by the shape data to the shape data to transmit to the position information receiving apparatus when it is judged that the object is specified incorrectly.


**Amended claims under Art. 19.1 PCT**

1. A position information transmission apparatus for transmitting shape data indicating an object on a map to a position information receiving apparatus, and causing the position information receiving apparatus perform a specification processing using the shape data to specify the object, the position information transmission apparatus comprising:

an incorrect specification judging section for performing a specification processing which is the same as the specification processing on the position information receiving apparatus side using the shape data, to judge whether or not the object is specified incorrectly; an adding section for adding additional information for specifying the object to the shape data when the incorrect specification judging section judges that the object is specified incorrectly; and a transmission section for transmitting the shape data added with the additional information to the position information receiving apparatus.

2. The position information transmission apparatus according to claim 1, wherein the incorrect specification judging section performs the specification processing to judge whether or not the object is specified incorrectly when the shape data to be transmitted to the position information receiving apparatus is created and transmitted, and when the information indicating that the object is specified incorrectly is received from the position information receiving apparatus.

3. The position information transmission apparatus according to claim 1, wherein the incorrect specification judging section performs the specification processing to judge whether or not the object is specified incorrectly only when the information indicating that the object is specified incorrectly is received from the position information receiving apparatus.

4. The position information transmission apparatus according to claim 1, wherein the adding section adds the shape data of the portion extended from the shape data as additional information to the shape data so as to create a difference between the object indicated by the shape data to be transmitted and another specified object when the incorrect specification judging section judges that the object is specified incorrectly.

5. The position information transmission apparatus according to claim 1, wherein the adding section adds shape data of another specifiedobject as the additional information to the shape data to be transmitted when the incorrect specification judging section judges that the object is specified incorrectly.

6. The position information transmission apparatus according to claim 1, wherein the adding section adds attribute information of the object indicated by the shape data as the additional information to the shape data to be transmitted when the incorrect specification judging section judges that the object is specified incorrectly.

7. The position information transmission apparatus according to claim 1, further comprising a decimating section for decimating a coordinate sequence of the shape data to be transmitted to reduce transmission data size when it is judged that the object is not specified incorrectly.

8. A position information transmission apparatus for transmitting shape data indicating an object on a map to a position information receiving apparatus, and causing the position information receiving apparatus perform a specification processing using the shape data to specify the object, the position information transmission apparatus comprising:

an incorrect specification judging section for performing a specification processing which is the same as the specification processing on the position information receiving apparatus side using the shape data, to judge whether or not the object is specified incorrectly;
a storage section for storing the information related to the object incorrectly judged by the incorrect specification judging section as a database beforehand;
a storage judging section for judging whether or not incorrect judgment information about the transmitting object is included in the storage section when the shape data indicating the object is transmitted; and
a transmission section for transmitting the shape data related to the incorrectly judged object stored in the storage section and additional information for specifying the incorrectly judged object to the position information receiving apparatus when the storage judging section judges that the incorrect judgment information about the transmitting object is included.

9. The position information transmission apparatus according to claim 8, wherein, when the storage judging section judges that the incorrect judgment information about the transmitting object is not included in the storage section, the incorrect specification judging section again judges whether or not the transmitting object is specified incorrectly, and when it is judged that the transmitting object is specified incorrectly as a result , the transmission section adds additional information for specifying the incorrectly judged object to the shape data, and transmits the data to the position information receiving apparatus.

10. The position information transmission apparatus according to claim 8, wherein, when the storage judging section judges that the incorrect judgment information about the transmitting object is not included in the storage section, the incorrect specification judging section again judges whether or not the transmitting object is specified incorrectly, and when it is judged that the transmitting object is specified incorrectly, information about the incorrectly judged object is added and stored in the storage section.

11. The position information transmission apparatus according to claim 8, wherein:

a process of executing a specification processing which is the same as the specification processing on the position information receiving apparatus side using the shape data to judge whether or not the object is specified incorrectly by the incorrect specification judging section, and a process of storing the information related to the object incorrectly judged by the incorrect specification judging section beforehand as database by the storage section are performed beforehand off-line; and
a process of judging whether or not incorrect judgment information about the transmitting object is included in the storage section by the storage judging section when the shape data indicating the object is transmitted, and a process of transmitting the shape data related to the incorrectly judged object stored in the storage section and additional information for specifying the incorrectly judged object to the position information receiving apparatus, by the transmission section when the storage judging section judges that the incorrect judgment information about the transmitting object is included are performed on-line.

12. The position information transmission apparatus according to claim 9, wherein:

a process of executing a specification processing which is the same as the specification processing on the position information receiving apparatus side using the shape data to judge whether or not the object is specified incorrectly by the incorrect specification judging section, and a process of storing the information related to the object incorrectly judged by the incorrect specification judging section beforehand as database by the storage section are performed beforehand off-line; and
a process of judging whether or not incorrect judgment information about the transmitting object is included in the storage section by the storage judging section when the shape data indicating the object is transmitted, and a process of again judging whether or not the transmitting object is specified incorrectly by the incorrect specification judging section when the storage judging section judges that the incorrect judgment information about the transmitting object is not included in the storage section, and adding additional information for specifying the incorrectly judged object to the shape data to transmit to the position information receiving apparatus when it is judged that the transmitting object is specified incorrectly as a result, are performed on-line.

**13.** The position information transmission apparatus according to claim 10, wherein:

a process of executing a specification processing which is the same as the specification processing on the position information receiving apparatus side using the shape data to judge whether or not the object is specified incorrectly by the incorrect specification judging section, and a process of storing the information related to the object incorrectly judged by the incorrect specification judging section beforehand as database by the storage section are performed beforehand off-line; and

a process of judging whether or not the incorrect judgment information about the transmitting object is included in the storage section by the storage judging section when the shape data indicating the object is transmitted, and a process of again judging whether or not the transmitting object is specified incorrectly by the incorrect specification judging section when the storage judging section judges that the incorrect judgment information about the transmitting object is not included in the storage section, and additionally storing the information related to the incorrectly judged object to the storage section when it is judged that the transmitting object is specified incorrectly as a result are performed on-line.

**14.** (Canceled)

**15.** A method of transmitting position information of when transmitting shape data indicating an object on a map to a position information receiving apparatus, and causing the position information receiving apparatus perform a specification processing using the shape data to specify the object, the method comprising the steps of:

executing a specification processing which is the same as the specification processing on the position information receiving apparatus side using the shape data to judge whether or not the object is specified incorrectly; and adding additional information for specifying the object indicated by the shape data to the shape data to transmit to the position information receiving apparatus when it is judged that the object is specified incorrectly.

**16.** A program for causing a computer to transmit shape data indicating an object on a map to a position information receiving apparatus, and causing the position information receiving apparatus perform a specification processing using the shape data to specify the obj ect; the program for causing the computer to execute the steps of:

executing a specification processing which is the same as the specification processing on the position information receiving apparatus side using the shape data to judge whether or not the object is specified incorrectly; and adding additional information for specifying the object indicated by the shape data to the shape data to transmit to the position information receiving apparatus when it is judged that the object is specified incorrectly.

1101                                         1103

```
┌─────────────────────────┐          ┌─────────────────────────┐
│   TRAFFIC INFORMATION   │ ←——————→ │   TRAFFIC INFORMATION   │
│   COLLECTING CENTER A   │          │   COLLECTING CENTER B   │
└─────────────────────────┘          └─────────────────────────┘
```

1102

```
┌─────────────────────────┐
│      INFORMATION        │
│   DISTRIBUTING CENTER   │
└─────────────────────────┘
```

FIG.1 (PRIOR ART)

b=3333                    b=3333

                          g=33334444

c=11113333          d     e=4444

                          f=11114444

a=1111                    a=1111

FIG.2A                    FIG.2B

(PRIOR ART)

22

EP 1 783 722 A1

100 POSITION INFORMATION
TRANSMISSION APPARATUS

200 POSITION INFORMATION
RECEIVING APPARATUS

SHAPE DATA CREATING
SECTION — 110

INCORRECT SPECIFICATION
JUDGING SECTION — 120

ADDITIONAL INFORMATION
ADDING SECTION — 130

TRANSMISSION DATA
CREATING SECTION — 140

DATA TRANSMISSION
SECTION — 150

DATA DISPLAY SECTION — 240

DISPLAY DATA CREATING
SECTION — 230

INCORRECT SPECIFICATION
JUDGING SECTION — 220

DATA RECEIVING SECTION — 210

300

FIG.3

FIG.4A

FIG.4B

EP 1 783 722 A1

L2

L1

D1

n

FIG.5

EP 1 783 722 A1

L1

L2

L1

L2

FIG.6A

FIG.6B

FIG.7B

FIG.7A

100 POSITION INFORMATION
TRANSMISSION APPARATUS

```
┌─────────────────────────────────┐
│   SHAPE DATA CREATING      110   │
│        SECTION                   │
└─────────────────────────────────┘
                ↓
┌─────────────────────────────────┐
│  INCORRECT SPECIFICATION   120   │
│     JUDGING SECTION              │
└─────────────────────────────────┘
                ↕
┌─────────────────────────────────┐
│  ADDITIONAL INFORMATION    130   │
│      ADDING SECTION              │
└─────────────────────────────────┘
                ↓
┌─────────────────────────────────┐
│   TRANSMISSION DATA        140   │
│    CREATING SECTION              │
└─────────────────────────────────┘
                ↓
┌─────────────────────────────────┐
│    DATA TRANSMISSION       150   │
│        SECTION                   │
└─────────────────────────────────┘

┌─────────────────────────────────┐
│   DATA RECEIVING SECTION   160   │
└─────────────────────────────────┘
```

200 POSITION INFORMATION
RECEIVING APPARATUS

```
┌─────────────────────────────────┐
│   DATA DISPLAY SECTION     240   │
└─────────────────────────────────┘
                ↑
┌─────────────────────────────────┐
│  DISPLAY DATA CREATING     230   │
│        SECTION                   │
└─────────────────────────────────┘
                ↑
┌─────────────────────────────────┐
│  INCORRECT SPECIFICATION   225   │
│     JUDGING SECTION              │
└─────────────────────────────────┘
                ↑
┌─────────────────────────────────┐
│   DATA RECEIVING SECTION   210   │
└─────────────────────────────────┘

┌─────────────────────────────────┐
│   SHAPE DATA CREATING      250   │
│        SECTION                   │
└─────────────────────────────────┘
                ↓
┌─────────────────────────────────┐
│   TRANSMISSION DATA        260   │
│    CREATING SECTION              │
└─────────────────────────────────┘
                ↓
┌─────────────────────────────────┐
│    DATA TRANSMISSION       270   │
│        SECTION                   │
└─────────────────────────────────┘
```

300

FIG.8

**FIG.9A**

START

CREATE SHAPE
DATA — S1100

NO — IS DATA
RECEIVED? — S1112

YES

RECEIVE AND
ANALYZE DATA — S1114

S1130
ADD ADDITIONAL
INFORMATION

SPECIFY ROAD — S1110

YES

IS ROAD
SPECIFIED
INCORRECTLY
? — S1120

NO

CREATE
TRANSMISSION DATA — S1140

TRANSMIT DATA — S1150

END

**FIG.9B**

START

NO — IS DATA
RECEIVED? — S1200

YES

RECEIVE AND
ANALYZE DATA — S1210

SPECIFY ROAD — S1220

IS ROAD
SPECIFIED
INCORRECTLY
? — S1222 — NO

YES

CREATE SHAPE
DATA — S1224

CREATE DISPLAY DATA — S1230

CREATE
TRANSMISSION
DATA — S1226

TRANSMIT DATA — S1228

DISPLAY DATA — S1240

END

END

**FIG.10A**

START → CREATE SHAPE DATA (S1100) → IS DATA RECEIVED? (S1112) — NO loops back / YES → RECEIVE AND ANALYZE DATA (S1114) → SPECIFY ROAD (S1110) → IS ROAD SPECIFIED INCORRECTLY? (S1120) — YES → ADD ADDITIONAL INFORMATION (S1130) / NO → CREATE TRANSMISSION DATA (S1140) → TRANSMIT DATA (S1150) → END

**FIG.10B**

START → IS DATA RECEIVED? (S1200) — NO loops back / YES → RECEIVE AND ANALYZE DATA (S1210) → SPECIFY ROAD (S1220) → IS ROAD SPECIFIED INCORRECTLY? (S1222) — NO → CREATE DISPLAY DATA (S1230) → DISPLAY DATA (S1240) → END / YES → CREATE SHAPE DATA (S1224) → CREATE TRANSMISSION DATA (S1226) → TRANSMIT DATA (S1228) → END

EP 1 783 722 A1

100 POSITION INFORMATION
TRANSMISSION APPARATUS

200 POSITION INFORMATION
RECEIVING APPARATUS

| SHAPE DATA CREATING SECTION | 110 |

| INCORRECT SPECIFICATION JUDGING SECTION | 120 |

DECIMATING INSTRUCTION

| ADDITIONAL INFORMATION ADDING SECTION | 130 |

| DATA DECIMATING SECTION | 410 |

| TRANSMISSION DATA CREATING SECTION | 140 |

| DATA TRANSMISSION SECTION | 150 |

| DATA DISPLAY SECTION | 240 |

| DISPLAY DATA CREATING SECTION | 230 |

| INCORRECT SPECIFICATION JUDGING SECTION | 220 |

| DATA RECEIVING SECTION | 210 |

300

FIG.11

FIG.12

## FIG.13A

START

↓

◇ ~ S1100

CREATE SHAPE DATA

↓ ~ S1110

SPECIFY ROAD

↓

S1130 — ADD ADDITIONAL INFORMATION

↓ YES

◇ IS ROAD SPECIFIED INCORRECTLY ? ~ S1120

↓ NO

STORE INCORRECT JUDGMENT INFORMATION ~ S1170

↓

◇ IS ALL SHAPE DATA COMPLETE? ~ S1180

NO →

↓ YES

END

## FIG.13B

START

↓

CREATE SHAPE DATA ~ S1310

↓

JUDGE STORED ~ S1320

↓

◇ STORED? ~ S1330

NO →    YES ↓

S1380 — ADD ADDITIONAL INFORMATION

S1360 — SPECIFY ROAD

↓

◇ IS ROAD SPECIFIED INCORRECTLY ? ~ S1370

YES →    NO ↓

STORE INCORRECT JUDGMENT INFORMATION ~ S1390

↓

CREATE TRANSMISSION DATA ~ S1340

↓

TRANSMIT DATA ~ S1350

↓

END

EP 1 783 722 A1

<table>
<tr><td colspan="2">**INTERNATIONAL SEARCH REPORT**</td><td>International application No.<br>PCT/JP2005/013942</td></tr>
</table>

A. CLASSIFICATION OF SUBJECT MATTER
*G09B29/00* (2006.01), *G01C21/00* (2006.01), *G08G1/09* (2006.01)

According to International Patent Classification (IPC) or to both national classification and IPC

B. FIELDS SEARCHED

Minimum documentation searched (classification system followed by classification symbols)
*G09B29/00* (2006.01), *G01C21/00* (2006.01), *G08G1/09* (2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-328034 A (Matsushita Electric Industrial Co., Ltd.),<br>15 November, 2002 (15.11.02),<br>Full text<br>(Family: none) | 1-16 |
| A | JP 2002-328032 A (Matsushita Electric Industrial Co., Ltd.),<br>15 November, 2002 (15.11.02),<br>Full text<br>& US 2003/0109984 A1    & EP 1306647 A1<br>& WO 2002/088634 A1    & CA 2443262 A | 1-16 |

| [X] Further documents are listed in the continuation of Box C. | [ ] See patent family annex. |
|---|---|

\*   Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>21 October, 2005 (21.10.05) | Date of mailing of the international search report<br>01 November, 2005 (01.11.05) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2005/013942 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-328033 A  (Matsushita Electric Industrial Co., Ltd.), 15 November, 2002 (15.11.02), Full text (Family: none) | 1-16 |
| A | JP 2002-228468 A  (Matsushita Electric Industrial Co., Ltd.), 14 August, 2002 (14.08.02), Full text & US 2003/0004636 A1     & US 2004/0039524 A1 & EP 1273883 A1          & EP 1429117 A1 & WO 2002/061374 A1     & DE 60201051 D & CA 2431650 A          & AT 274688 T & CN 1488067 T          & ES 2227440 T | 1-16 |
| A | JP 2003-288007 A  (Matsushita Electric Industrial Co., Ltd.), 10 October, 2003 (10.10.03), Full text & US 2005/0131642 A        & EP 1489380 A1 & WO 2003/087723 A1        & CA 2479322 A | 1-16 |
| A | JP 2003-254762 A  (Matsushita Electric Industrial Co., Ltd.), 10 September, 2003 (10.09.03), Full text & US 2004/0044468 A1      & EP 1480186 A1 & WO 203/073396 A1         & CA 2444271 A & CN 1507613 A | 1-16 |
| A | JP 2001-066146 A  (Matsushita Electric Industrial Co., Ltd.), 16 March, 2001 (16.03.01), Full text (Family: none) | 1-16 |

Form PCT/ISA/210 (continuation of second sheet) (April 2005)

**INTERNATIONAL SEARCH REPORT**

International application No.

PCT/JP2005/013942

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
"The special technical feature" of the invention of claims 1-13, 15-16 is that a position information transmitter performs the same identifying processing as the identifying processing by a position information receiver by using shape data and judges whether or not an object is wrongly identified. "The special technical feature" of the invention of claim 14 is that if a wrong identification judging means judges that an object is wrongly identified, a position information receiver creates information representing wrong identification and shape data on an object subjected to wrong identification and transmits the information representing the wrong identification and shape data            (Continued to extra sheet.)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

| International application No. |
| --- |
| PCT/JP2005/013942 |

Continuation of Box No.III of continuation of first sheet(2)

to a position information transmitter.
    Since the invention of claims 1-13, 15-16 and the invention of claim 14 are not in a technical relationship involving one or more of the dame or corresponding special technical features, they are not so linked as to form a single general inventive concept. Therefore, the number of inventions of the claims contained in this international application is two.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001041757 A
- JP 2004228555 A
- JP 2005213293 A